# EUROPÄISCHE PATENTANMELDUNG

(11) **EP 3 993 202 A1**
(43) Veröffentlichungstag der Anmeldung: **04.05.2022**
(21) Anmeldenummer: 21205588.3
(22) Anmeldetag: 29.10.2021
(51) Int. Cl.: H02G 11/00, H02G 3/30

(54) **KABELGEBUNDENES ELEKTRISCHES GERÄT MIT KABELSCHONENDER FÜHRUNG**

(30) Priorität: 30.10.2020 DE 102020213700
(71) Anmelder: Continental Engineering Services GmbH, 60489 Frankfurt (DE)
(72) Erfinder: Schirra, Roman, 60488 Frankfurt am Main (DE); Milius, Patrick, 60488 Frankfurt am Main (DE)
(74) Vertreter: Continental Corporation

(57) **Zusammenfassung**

Elektrisches Gerät, welches beweglich, insbesondere rollbar, ausgebildet ist, wobei das Gerät zumindest ein erstes Kabel (1) aufweist, mit welchem das Gerät mit elektrischer Energie versorgt wird, wobei das erste Kabel (1) in dem Gerät über ein gerundetes Auflageelement (3) geführt wird, wobei dieses gerundete Auflageelement (3) im Wesentlichen über einem Drehpunkt hinsichtlich der Beweglichkeit des Geräts angeordnet ist.

## Beschreibung

Die Erfindung betrifft ein elektrisches Gerät gemäß Oberbegriff von Anspruch 1.

Es ist bekannt, dass bei kabelgebundenen elektrischen Geräten die Kabel mechanischem Stress und Abnutzung unterliegen, was insbesondere bei Hochvoltkabeln sicherheitsrelevant sein kann.

Die Erfindung hat sich die Aufgabe gestellt, ein elektrisches Gerät vorzuschlagen, welches eine Kabelführung ermöglicht, die platzsparend und/oder kostengünstig und/oder eine im Wesentlichen reibungsfreie bzw. spannungsfreie bzw. stauchungs-/zugfreie bzw. biegungsfrei hinsichtlich der Führung eines Kabels ist, mit welchem das Gerät mit elektrischer Energie versorgt wird.

Diese Aufgabe wird erfindungsgemäß gelöst durch das elektrische Gerät gemäß Anspruch 1.

Es ist bevorzugt, dass das gerundete Auflageelement im Wesentlichen kuppelförmig und/oder kalottenförmig oder zylinderförmig mit einer gerundeten Kante zwischen Deckelfläche und Mantel ausgebildet ist.

Das gerundete Auflageelement ist vorzugsweise im Wesentlichen über einem Drehlager angeordnet ist, welches eingerichtet ist Drehbewegungen des Geräts zu ermöglichen, wobei das Drehlager im Wesentlichen einen Drehpunkt des Geräts definiert.

Es ist zweckmäßig, dass das gerundete Auflageelement als Teil einer Abdeckung ausgebildet ist und diese Abdeckung im Wesentlichen das Drehlager abdeckt und/oder über dem Drehlager angeordnet ist.

Es ist bevorzugt, dass das Gerät wenigstens ein Kabelführungselement aufweist, welches so ausgebildet und angeordnet ist, dass es das erste Kabel im Wesentlichen mittig über das gerundete Auflageelement führt.

Das Gerät ist vorzugsweise so ausgebildet, dass das erste Kabel vor und nach dessen Verlauf über das gerundete Auflageelement jeweils zwangsgeführt wird, insbesondere mittels jeweils eines Führungselements. Dabei weist das Gerät zweckmäßigerweise diese beiden Führungselemente zusätzlich oder alternativ zu dem Kabelführungselement auf. Die beiden Führungselement vor und nach dem Verlauf des zumindest ersten Kabels über das gerundete Auflageelement sind insbesondere so ausgebildet, dass zumindest das erste Kabel durch diese beiden Führungselemente jeweils zwangsgeführt wird bzw. dass das erste Kabel durch diese beiden Führungselemente im Wesentlichen positioniert und/oder fixiert ist, besonders bevorzugt formschlüssig.
Besonders bevorzugt sind die Führungselemente vor und nach dem gerundeten Auflageelement schellenförmig bzw. klammerförmig bzw. das erste Kabel fest umgreifend ausgebildet.

Das Gerät weist vorzugsweise wenigstens ein Drehlager auf, welches den Drehpunkt definiert, und zumindest zwei Rollkörpern, wobei das Gerät auf dem Drehlager und den zumindest zwei Rollkörpern aufsteht.

Es ist bevorzugt, dass das Gerät wenigstens ein zweites Kabel aufweist, welches zusätzlich über das gerundete Auflageelement geführt ist.

Es ist bevorzugt, dass das Gerät zumindest einen ersten angetriebenen Rollkörper aufweist und insbesondere zusätzlich ein oder mehrere passive Rollkörper, wobei das Gerät so ausgebildet ist, dass es auf den Rollkörpern aufsteht/ aufstehen kann.

Es ist zweckmäßig, dass das Gerät auf dem Drehlager und zwei Rollkörpern aufsteht, von denen zumindest ein Rollkörper angetrieben ist, wobei insbesondere das Gerät auf genau drei Punkten aufsteht, welche durch das Drehlager und die beiden Rollkörper ausgebildet /definiert sind. Hierdurch ist das Gerät insbesondere statisch voll bestimmt und stabil stehend.

Das Gerät ist vorzugsweise als Laderoboter ausgebildet.

Unter einem Laderoboter wird vorzugsweise ein Gerät zum elektrischen Laden eines elektrischen Fahrzeugs, insbesondere Kraftfahrzeugs bzw. Personenkraftfahrzeugs oder Lastkraftfahrzeugs, verstanden, wobei der Laderoboter die elektrische Verbindung für einen Ladevorgang zwischen einer Steckereinheit des Laderoboters und einer Steckereinheit des Fahrzeugs herstellt. Dafür ist der Laderoboter zweckmäßigerweise so ausgebildet, dass er seine Steckereinheit gegenüber der Steckereinheit des Fahrzeugs für eine Kontaktierung ausrichten und/oder positionieren kann und besonders bevorzugt die Steckereinheit des Laderoboters mit gegenüber der Steckereinheit des Fahrzeugs in Eingriff gebracht und elektrisch leitend verbunden wird.

Das Fahrzeug weist zweckmäßigerweise einen elektrischen Antrieb mit einer Batterie bzw. einem Akkumulator auf, welche/r insbesondere von dem Laderoboter geladen werden soll.

Der Laderoboter ist bevorzugt als Laderoboter für konduktives Laden ausgebildet.

Das Gerät weist vorzugsweise ein Gehäuse auf, insbesondere aus Kunststoff. Zweckmäßigerweise hinsichtlich der Führungselemente vor und nach dem gerundeten Auflageelement ist eines der Führungselemente vor bzw. außerhalb des Gehäuses angeordnet, dabei insbesondere auf einer drehbar mittels des Drehlagers gelagerten Platte, und das andere Führungselement ist innerhalb des Geräts angeordnet.

Bevorzugt ist das gerundete Auflageelement, allseitig gerundet ausgebildet.

Das gerundete Auflageelement ist zweckmäßigerweise als Zylinder mit abgerundeter Kante und einer im Wesentlichen ebenen Deckelfläche ausgebildet, wobei das erste Kabel über die Deckelfläche geführt wird. Alternativ vorzugsweise ist das gerundete Auflageelement als abgeflachte Halbkugel bzw. Kugelsegment bzw. Kalotte ausgebildet, wobei die Abflachung insbesondere im Wesentlichen eben ausgebildet ist.

Ein Rollkörper ist vorzugsweise als ein Rad oder eine Rolle oder eine Kugelrolle ausgebildet.

### Bezugszeichen

- 1: erstes Kabel
- 2: zweites Kabel
- 3: gerundetes Auflageelement
- 4: gerundete Kante des Zylinders
- 5: Deckelfläche des Zylinders
- 6: Abdeckelement eines Führungselements bzw. Kabelführungselements
- 7: Kabelführungskanal eines Führungselements bzw. Kabelführungselements
- 8: Führungselement/e
- 9: Lagerung bzw. Abdeckung erster, angetriebener Rollkörper
- 10: Lagerung bzw. Abdeckung zweiter Rollkörper
- 11: drehbar gelagerte Platte
- 12: Gehäuse des Geräts
- 13: weitere Bauteile

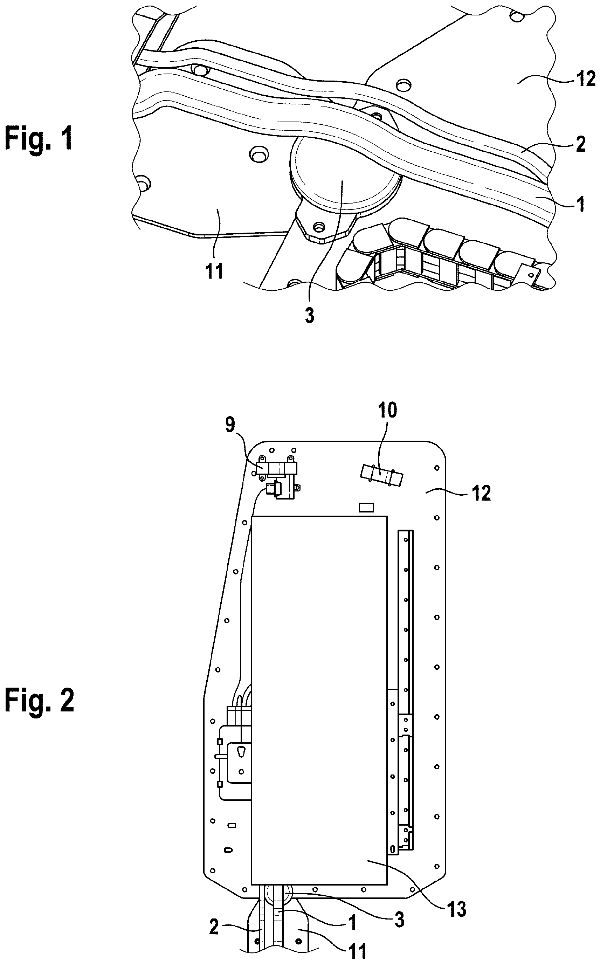

Es zeigen Fig. 1 bis 5 in schematischer Darstellung Ausführungsbeispiele.

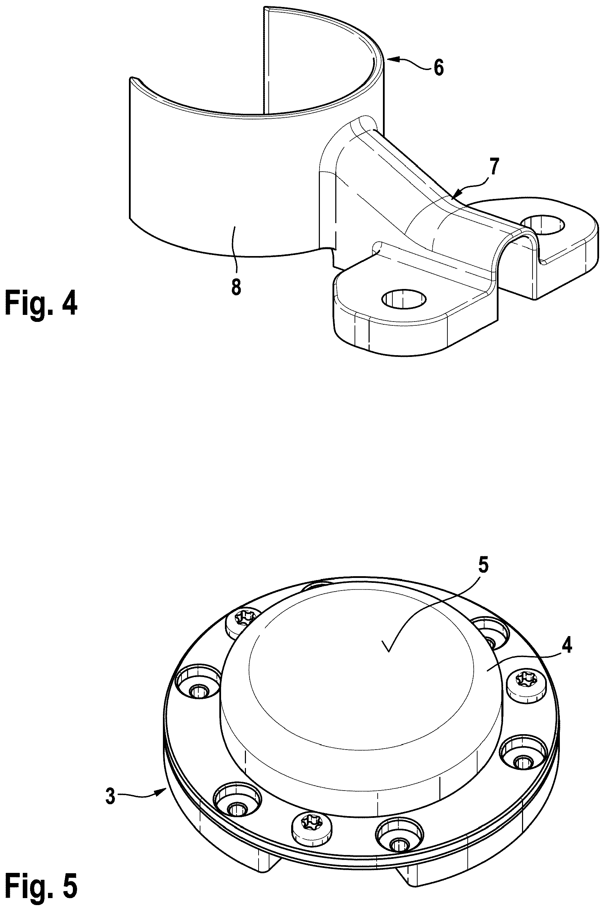

In Fig. 1 ist beispielhaft gezeigt, wie das erste Kabel 1 und das zweite Kabel 2 über das gerundete Auflageelement 3 in dem Gerät 12 geführt werden. Dabei ist die Bodenplatte des Gehäuses 12 veranschaulicht, was schematisch zeigt, in welchem Bereich sich das Gehäuse erstreckt. An dem einem nicht dargestellten Drehlager, welcher unter gerundetem Auflageelement 3 angeordnet ist, ist eine drehbare Platte 11 befestigt, über die das Kabel geführt wird und auf welchem beispielhaft ein Führungselement angeordnet werden kann zu Führung des ersten und zweiten Kabels, insbesondere ein Führungselement bzw. Kabelführungselement, wie anhand der Fig. 4 veranschaulicht.

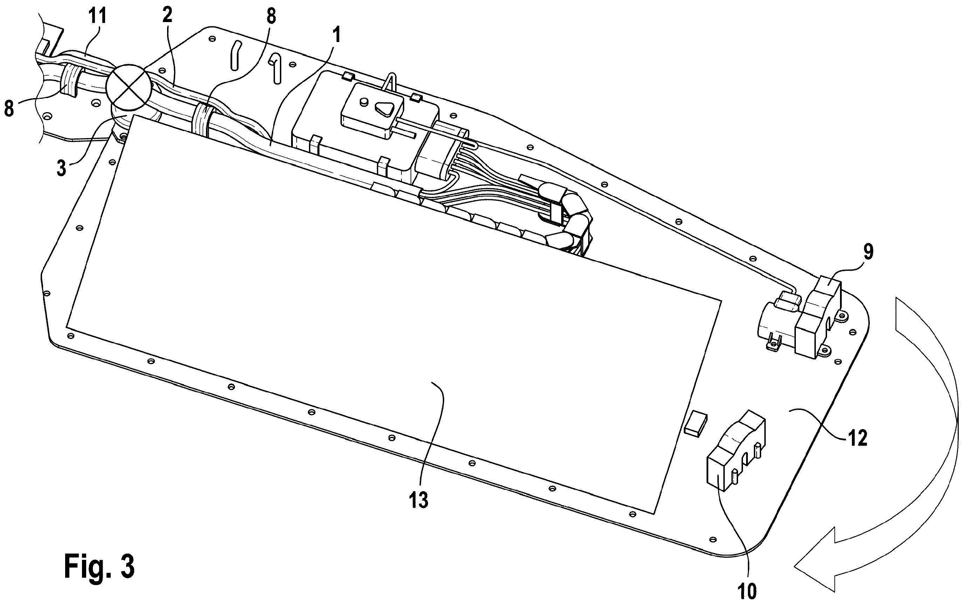

Fig. 2 und 3 zeigen zwei verschiedene Ansichten eines Ausführungsbeispiels des Geräts, wobei die Bodenplatte des Gehäuses 12 gezeigt ist, zur Veranschaulichung der Abmessung des Gehäuses und des Geräts. Erstes und zweites Kabel 1, 2 sind über das gerundete Auflageelement 3 geführt, welches beispielhaft als Abdeckung eines Drehlagers ausgebildet ist. Das Drehlager definiert einen Drehpunkt, wie anhand des Kreuzes und des Drehpfeils in Fig. 3 offenbart. Das Gerät weist außerdem einen ersten angetriebenen Rollkörper auf, dessen Lagerung und Antrieb 9 gezeigt sind und einen zweiten Rollkörper, dessen Lager 10 veranschaulicht ist. Das Gerät steht also auf drei Punkten auf, dem Drehlager und gerundetem Auflageelement 3 und den beiden Rollkörpern 9, 10. Das Rechteckt 13 verdeckt jeweils Bauteile des Geräts, die hier nicht näher offenbart werden sollen.

Fig. 4 veranschaulicht ein beispielhaftes Kabelführungselement 8, welches so ausgebildet ist, dass es das hier nicht dargestellte erste Kabel und optional weitere Kabel zumindest mittels eines Kabelführungskanals im Wesentlichen mittig über das gerundete Auflageelement, was hier ebenfalls nicht dargestellt ist, führt. Dieses Kabelführungselement 8 weist dabei ein Abdeckelement 6 auf, welches das gerundete Auflageelement teilweise umgreift. Dabei ist das Kabelführungselement außerhalb des Gehäuses an einer mit dem Gehäuse drehbar verbundenen Platte befestigt, hier nicht dargestellt, und das Abdeckelement 6 schließt das Gehäuse an dem Kabelzugang des Geräts im Bereich des gerundeten Auflageelements ab.

Anhand der Fig. 5 ist ein Ausführungsbeispiel eines gerundete Auflageelements 3 veranschaulicht. Dieses gerundete Auflageelement 3 ist dabei im Wesentlichen zylinderförmig mit einer gerundeten Kante 4 zwischen Deckelfläche 5 des Zylinders und dessen Mantel ausgebildet. Über diese Deckelfläche 5 und die gerundete Kante 4 wird zumindest das erste Kabel geführt.

## Patentansprüche

1. Elektrisches Gerät, welches beweglich, insbesondere rollbar, ausgebildet ist, wobei das Gerät zumindest ein erstes Kabel (1) aufweist, mit welchem das Gerät mit elektrischer Energie versorgt wird, **dadurch gekennzeichnet,**
**dass** das erste Kabel (1) in dem Gerät über ein gerundetes Auflageelement (3) geführt wird, wobei dieses gerundete Auflageelement (3) im Wesentlichen über einem Drehpunkt hinsichtlich der Beweglichkeit des Geräts angeordnet ist.

2. Elektrisches Gerät nach Anspruch 1, **dadurch gekennzeichnet,**
**dass** das gerundete Auflageelement (3) im Wesentlichen kuppelförmig und/oder kalottenförmig oder zylinderförmig mit einer gerundeten Kante (4) zwischen Deckelfläche und Mantel ausgebildet ist.

3. Elektrisches Gerät nach mindestens einem der vorhergehenden Ansprüche,
**dadurch gekennzeichnet,**
**dass** das gerundete Auflageelement (3) im Wesentlichen über einem Drehlager angeordnet ist, welches eingerichtet ist Drehbewegungen des Geräts zu ermöglichen, wobei das Drehlager im Wesentlichen einen Drehpunkt des Geräts definiert.

4. Elektrisches Gerät nach Anspruch 3, **dadurch gekennzeichnet,**
**dass** das gerundete Auflageelement (3) als Teil einer Abdeckung ausgebildet ist und diese Abdeckung im Wesentlichen das Drehlager abdeckt und/oder über dem Drehlager angeordnet ist.

5. Elektrisches Gerät nach mindestens einem der vorhergehenden Ansprüche,
**dadurch gekennzeichnet,**
**dass** das Gerät wenigstens ein Kabelführungselement (8) aufweist, welches so ausgebildet und angeordnet ist, dass es das erste Kabel im Wesentlichen mittig über das gerundete Auflageelement (3) führt.

6. Elektrisches Gerät nach mindestens einem der vorhergehenden Ansprüche,
**dadurch gekennzeichnet,**
**dass** das Gerät so ausgebildet ist, dass das erste Kabel (1) vor und nach dessen Verlauf über das gerundete Auflageelement (3) jeweils zwangsgeführt wird, insbesondere mittels jeweils eines Führungselements (8).

7. Elektrisches Gerät nach mindestens einem der vorhergehenden Ansprüche,
**dadurch gekennzeichnet,**
**dass** das Gerät auf wenigstens einem Drehlager, welches den Drehpunkt definiert, und zumindest zwei Rollkörpern (9, 10) aufsteht.

8. Elektrisches Gerät nach mindestens einem der vorhergehenden Ansprüche,
**dadurch gekennzeichnet,**
**dass** das Gerät wenigstens ein zweites Kabel (2) aufweist, welches zusätzlich über das gerundete Auflageelement (2) geführt ist.

9. Elektrisches Gerät nach mindestens einem der vorhergehenden Ansprüche,
**dadurch gekennzeichnet,**
**dass** das Gerät zumindest einen ersten angetriebenen Rollkörper (9) aufweist und insbesondere zusätzlich ein oder mehrere passive Rollkörper (10), wobei das Gerät so ausgebildet ist, dass es auf den Rollkörpern aufsteht/ aufstehen kann.

10. Elektrisches Gerät nach mindestens einem der vorhergehenden Ansprüche,
**dadurch gekennzeichnet,**
**dass** das Gerät auf dem Drehlager und zwei Rollkörpern (9, 10) aufsteht, von denen zumindest ein Rollkörper (9) angetrieben ist, wobei insbesondere das Gerät auf genau drei Punkten aufsteht, welche durch das Drehlager und die beiden Rollkörper ausgebildet /definiert sind.

11. Elektrisches Gerät nach mindestens einem der vorhergehenden Ansprüche,
**dadurch gekennzeichnet,**
**dass** das Gerät als Laderoboter ausgebildet ist.
